# EUROPEAN PATENT APPLICATION

(11) **EP 1 614 347 A1**
(43) Date of publication of application: **11.01.2006**
(21) Application number: 05254294.1
(22) Date of filing: 08.07.2005
(51) Int. Cl.: A01K 97/12

(54) **Angling apparatus**

(30) Priority: 09.07.2004 GB 0415473
(71) Applicant: FOX INTERNATIONAL GROUP LIMITED, Hainault, Essex IG6 3UT (GB)
(72) Inventor: Fox, Clifford Royston, Danbury Essex CM3 4PG (GB); Simpson, Nigel, Ventnor Isle of Wight CO38 3BZ (GB)
(74) Representative: Crouch, David John

(57) **Abstract**

Angling apparatus comprising an electronic fish-bite detector (10) and a bite-indicator (14) having a head (20, 42) which is coupled to the line (24) of a fishing rod (26) and which physically moves up and/or down according to whether the tension in the line (24) increases or decreases. The detector (10) has a part (30) which is engaged by such a line (24) when the apparatus is in use and a sensor (60) and circuitry (62, 64) coupled to that part (30) to provide a line-movement indicator signal indicative of movement of the line (24). An illumination device (32) of the detector (10) is connected to the circuitry (62, 64) to be illuminated in accordance with the line-movement indicator signal. The detector (10) is further provided with an infra-red encoder (66) connected to the circuitry (62, 64) to provide an IR encoding of the line-movement indicator signal, and an infra-red emitter (68) connected to the IR encoder (66) to emit an infra-red signal corresponding to the line-movement indicator signal. The head (20, 42) of the bite-indicator (14) is provided with an infra-red receiver (37, 53) which receives the infra-red signal when the apparatus is in use. The head (20, 42) is also provided with an infra-red decoder (72) connected to the infra-red receiver (37, 53) to reconstitute the line-movement indicator signal of the detector (10) in the said head (20, 42). The latter is further provided with an illumination device (38, 52) connected to receive the line-movement indicator signal from the IR decoder (72) and to illuminate the illumination device (38, 52) of the head (20, 42) in the same way and substantially simultaneously and synchronously with the illumination of the illumination device (32) of the detector (10).

## Description

The present invention relates to angling apparatus comprising an electronic fish-bite detector and a further bite-indicator having a head which is coupled to the line of a fishing rod and which physically moves up and/or down according to whether the tension in the line increases or decreases.

The detector has a part which is coupled to the line when the apparatus is in use and is provided with sensor devices and circuitry to generate line-movement indicator signals indicative of movement on the line, and illumination means coupled to the circuitry to emit light as an alarm signal to the user in dependence upon the line-movement indicator signal.

It would assist the user in interpreting the significance of the illumination signals if the same illumination signal could be generated in the head of the further bite indicator.

A problem encountered with this is the difficulty of making electrical connections between the detector and the further indicator without increasing the risk of ingress of water or other contamination into the respective devices, and also the effect of such a connection on the movement of the further indicator.

The present invention seeks to obviate one or more of these disadvantages.

Accordingly, the present invention is directed to angling apparatus comprising an electronic fish-bite detector and a bite-indicator having a head which is coupled to the line of a fishing rod and which physically moves up and/or down according to whether the tension in the line increases or decreases, in which the detector has a part which is engaged by such a line when the apparatus is in use and a sensor and circuitry coupled to that part to provide a line-movement indicator signal indicative of movement of the line, and an illumination device connected to the circuitry to be illuminated in accordance with the line-movement indicator signal, the detector being further provided with an infra-red encoder connected to the circuitry to provide an IR encoding of the line-movement indicator signal, and an infra-red emitter connected to the IR encoder to emit an infra-red signal corresponding to the line-movement indicator signal, the head of the bite-indicator being provided with an infra-red receiver which receives the infra-red signal when the apparatus is in use, the said head also being provided with an infra-red decoder connected to the infra-red receiver to reconstitute the line-movement indicator signal of the detector in the said head, the latter further being provided with an illumination device connected to receive the line-movement indicator signal from the IR decoder and to illuminate the illumination device of the head in the same way and substantially simultaneously and synchronously with the illumination of the illumination device of the detector.

Preferably, the illumination devices are LEDs. The infrared emitter may be an infrared LED.

The said head of the bite-indicator is preferably provided with a battery.

The bite-indicator may comprise a pivotable arm at the end of which is mounted the head, or alternatively it may comprise a hanger which simply hangs from the line of the rod, possibly connected to a bank stick or other support via a flexible cable so that it is not lost when detached from the line.

An example of angling apparatus embodying the present invention will now be described with reference to the accompanying drawings, in which:
- Figure 1: shows an elevational perspective view of the first embodiment of such apparatus;
- Figure 2: shows an elevational perspective view of a second embodiment of such apparatus;
- Figure 3: shows a block circuit diagram of the circuitry in a detector of the apparatus shown in Figure 1 or Figure 2; and
- Figure 4: shows the a block circuit diagram of circuitry present in a different part of the apparatus shown in Figure 1 or Figure 2.

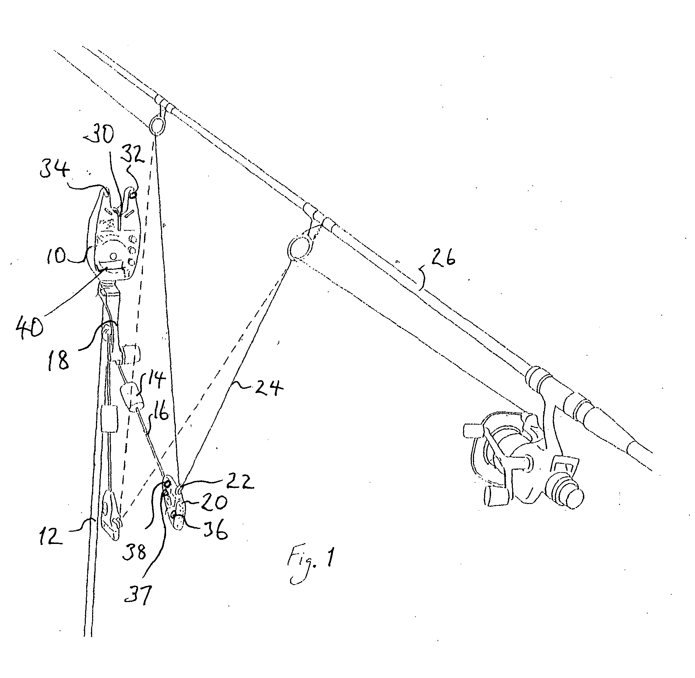

The angling apparatus shown in Figure 1 comprises an electronic bite detector 10 supported at the top of a bank stick 12. Extending from the bottom of the detector 10, in a direction which is intended to be towards the user, is a further bite-indicator device 14 in the form of an arm 16, pivotally connected to a mount 18 also at the top of the bank stick 12 but underneath the detector 10. At an end of the arm 16, further from the mount 18, is a head part 20 having an engagement device 22 for releasably engaging a line 24 of a fishing rod 26.

The detector 10 is provided with a wheel 30 over which the line 24 runs when the apparatus is in use so as to rotate the wheel in the event of longitudinal movement of the line 24. At the same time, it will be appreciated that the head 20 will rise or fall according to whether the tension of the line 24 increases or decreases as a result of a fish-bite.

The detector 10 is also provided with an LED 32 and an infrared emitting LED 34.

The head 20 of the further indicator device 14 is provided with an LED 36, an infrared receiver 37, as well as its own battery 38. The detector 10 is also provided with its own battery 40.

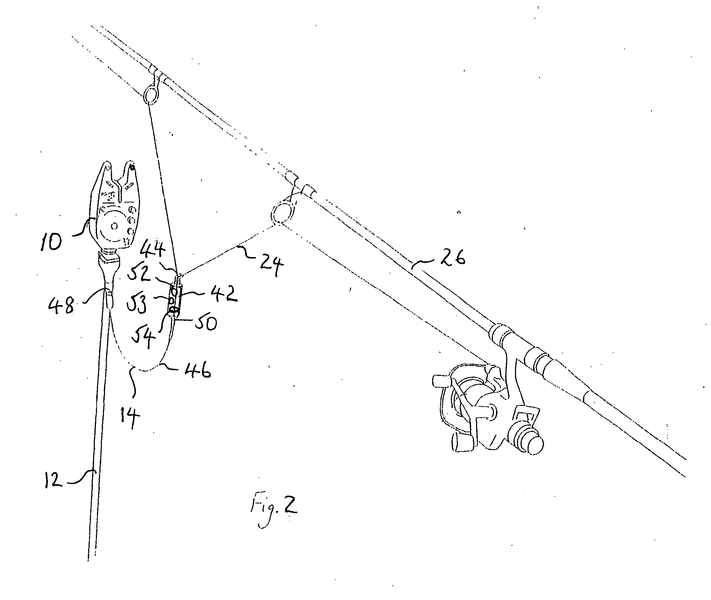

In the embodiment shown in Figure 2, the further indicator device 14 is in the form of a hanger which is a generally cylindrical head portion 42 with engagement means 44 which engage the line 24 in a releasable fashion. When released from the line 24, the head 42 falls freely under the force of gravity and is retained by a flexible cable 46 connected at one end 48 to the top of the bank stick 12 and at the other end 50 to the head 42. The head 42 of the hanger also has an LED 52, and an infrared receiver 53, and is provided with its own battery 54.

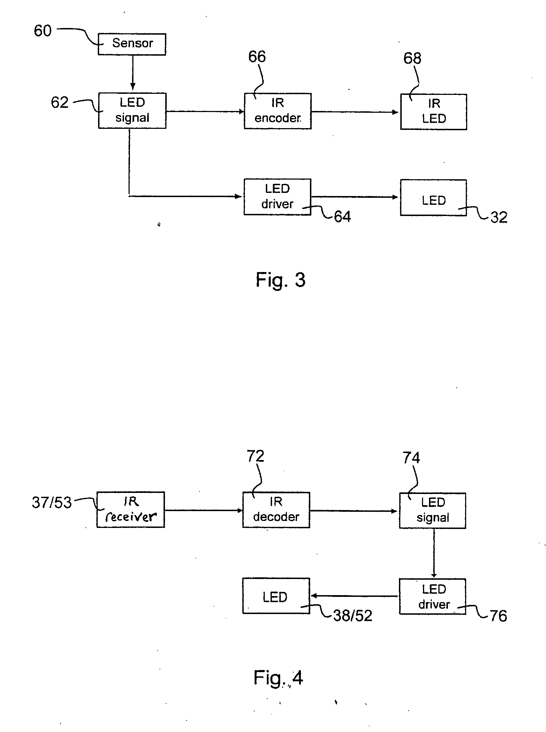

Circuitry of the detector 10 is shown in Figure 3, and circuitry of the further indicator device 14 is shown in Figure 4.

With reference to Figure 3, the detector 10 is provided with a sensor 60 coupled to the wheel 30 and connected to circuitry 62 which generates a light emitting diode signal. For example, the signal may emit a pulse every time a sensor 60 is triggered, or it may do this less frequently, or the switching may depend upon the direction of line movement. Connected to the LED generated circuitry 62 is an LED driver 64 connected in turn to the LED 32 of the detector 10. An IR encoder 56 of the detector 10 is also connected to the LED generating circuitry 62 and also to an infrared LED 68 so that the infrared LED 68 emits infrared radiation in accordance with signals from the IR encoder 66.

Signals from the infrared LED 68 are received by the IR receiver 37/53 in the head 20 or 42 of the further indicator device 14. An IR decoder 72 processes signals from the IR receiver 70 and forwards them to an LED signal generator 74. The latter is connected to an LED driver 76, which in turn is connected to the LED 38 or 52 of the further indicator device 14.

As a result, both the LED 32 of the detector 10 and the LED 38/52 of the further indicator device 14 are illuminated in the same fashion simultaneously and synchronously. Thus, whenever the LED 32 is illuminated, so is the LED 38/52, and whenever the LED 32 is not illuminated, neither is the LED 38/52.

Numerous variations and modifications to the illustrated apparatus may occur to the reader without taking the resulting construction outside the scope of the present invention. For example, the infrared LED 34 may be placed elsewhere on the body of the detector 10 and not necessarily at the top, so long as it is in a prominent enough position to transmit signals that will be picked up by the infrared receiver 37/53.

The infrared LED 34 may be retained behind an infrared translucent window positioned in the housing of the bite alarm 10.

The IR encoder 66 and the IR decoder 72 may offer the user the option to select any one of four address codes, enabling the user to have up to four sets of detector and associated indicator device without the different sets interfering with one another.

## Claims

1. Angling apparatus comprising an electronic fish-bite detector (10) and a bite-indicator (14) having a head (20, 42) which is coupled to the line (24) of a fishing rod (26) and which physically moves up and/or down according to whether the tension in the line (24) increases or decreases, in which the detector (10) has a part (30) which is engaged by such a line (24) when the apparatus is in use and a sensor (60) and circuitry (62, 64) coupled to that part (30) to provide a line-movement indicator signal indicative of movement of the line (24), and an illumination device (32) connected to the circuitry (62, 64) to be illuminated in accordance with the line-movement indicator signal, **characterized in that** the detector (10) is further provided with an infra-red encoder (66) connected to the circuitry (62, 64) to provide an IR encoding of the line-movement indicator signal, and an infra-red emitter (68) connected to the IR encoder (66) to emit an infra-red signal corresponding to the line-movement indicator signal, the head (20, 42) of the bite-indicator (14) being provided with an infra-red receiver (37, 53) which receives the infra-red signal when the apparatus is in use, the said head (20, 42) also being provided with an infra-red decoder (72) connected to the infra-red receiver (37, 53) to reconstitute the line-movement indicator signal of the detector (10) in the said head (20, 42), the latter further being provided with an illumination device (38, 52) connected to receive the line-movement indicator signal from the IR decoder (72) and to illuminate the illumination device (38, 52) of the head (20, 42) in the same way and substantially simultaneously and synchronously with the illumination of the illumination device (32) of the detector (10).

2. Angling apparatus according to claim 1, **characterized in that** the illumination devices (32, 38, 52) are LEDs.

3. Angling apparatus according to claim 1 or claim 2, **characterized in that** the infrared emitter (68) is an infrared LED (68).

4. Angling apparatus according to any preceding claim, **characterized in that** the said head (20, 42) of the bite-indicator (14) is provided with a battery.

5. Angling apparatus according to any preceding claim, **characterised in that** the bite-indicator (14) comprises a pivotable arm (16) at the end of which is mounted the head (20).

6. Angling apparatus according to any one of claims 1 to 4, **characterised in that** the bite-indicator (14) comprises a hanger (14) which hangs from the line (24) of the rod (26) .

7. Angling apparatus according to claim 6, **characterised in that** the hanger (14) is connected to a bank stick (12) or other support via a flexible cable (46) so that it is not lost when detached from the line (24).
